# EUROPEAN PATENT APPLICATION

(11) **EP 4 804 256 A1**
(43) Date of publication of application: **09.09.2026**
(21) Application number: 24887271.5
(22) Date of filing: 25.03.2024
(51) Int. Cl.: H01M 4/62, H01M 10/0567, H01M 4/133, H01M 10/054

(54) **SODIUM SECONDARY BATTERY AND ELECTRIC DEVICE**

(30) Priority: 09.11.2023 CN 202311487121
(71) Applicant: Contemporary Amperex Technology Co., Limited, Ningde, Fujian 352100 (CN)
(72) Inventor: WU, Kai, Ningde, Fujian 352100 (CN); TIE, Zhiwei, Ningde, Fujian 352100 (CN); ZOU, Hailin, Ningde, Fujian 352100 (CN); CHEN, Peipei, Ningde, Fujian 352100 (CN)
(74) Representative: Lorenz Seidler Gossel Part. mbB
(86) International application number: PCT/CN2024/083622
(87) International publication number: WO 2025/097646

(57) **Abstract**

The present application provides a sodium secondary battery and an electric device. The sodium secondary battery comprises a negative electrode sheet and an electrolyte; the negative electrode sheet comprises a negative electrode film layer; the negative electrode film layer contains a silicon element; and the electrolyte comprises a first component, and the first component is a fluorinated carbonate compound. According to the sodium secondary battery, the volume expansion rate after high temperature storage of the battery can be reduced, and the cycling stability of the battery is improved.

## Description

### CROSS-REFERENCE TO RELATED APPLICATIONS

The present application claims priority to Chinese Patent Application 202311487121.9, entitled "SODIUM SECONDARY BATTERY AND ELECTRICAL APPARATUS" filed on November 09, 2023, which is incorporated by reference in the present application.

### TECHNICAL FIELD

The present application relates to the technical field of secondary batteries, and relates to a sodium secondary battery and an electrical apparatus.

### BACKGROUND

In recent years, secondary batteries have been widely used in energy storage power systems such as hydropower, thermal power, wind power and solar power stations, as well as the fields of power tools, electric bicycles, electric motorcycles, electric vehicles, military equipment, aerospace and other fields. With the popularization of secondary batteries, the demands on the cycle performance, service life, and the like of the secondary batteries are increased.

In terms of resources and cost, sodium secondary batteries have greater advantages than lithium secondary batteries, but sodium secondary batteries experience more severe gas production during cycling and storage, which limits their further application.

### SUMMARY

The present application is implemented based on the above topic, and aims to provide a sodium secondary battery and to reduce gas produced by the sodium secondary battery and improve the cycling stability of the battery.

In a first aspect, the present application provides a sodium secondary battery, which includes a negative electrode plate and an electrolyte solution; the negative electrode plate includes a negative electrode film layer; the negative electrode film layer contains a silicon element; and the electrolyte solution includes a first component, and the first component is a fluorinated carbonate compound.

The silicon element introduced into the negative electrode film layer can induce the deposition of sodium ions, which helps inhibit the formation of sodium dendrites and reduces the oxidation gas produced by unstable components caused by sodium dendrites in a negative electrode, thereby decreasing the gas produced by the negative electrode during discharge, and reducing the volume expansion rate of the battery after high-temperature storage. However, the silicon element is easy to form silicates during the preparation process and during the cycling of the negative electrode, leading to high resistance in the battery and subsequently degrading the kinetic performance of the battery, especially its charging capability at low temperatures. The fluorinated carbonate compound introduced into the electrolyte solution can react with the silicate during cycling, thus reducing the silicate content, and jointly forming a stable solid electrolyte interphase (SEI) component on the negative electrode surface; and therefore, the negative impact of the silicon element on resistance can be reduced, the gas produced by the unstable components in the negative electrode is further decreased, comprehensively improving the cycling stability of the battery.

In any embodiment, based on the total mass of the electrolyte solution, the mass fraction of the fluorinated carbonate compound is a; and based on the total mass of the negative electrode film layer, the mass fraction of the silicon element in the negative electrode material film layer is b; and a and b meet: 0.07≤10a+b^{1/3}≤1.3, optionally, 0.13≤10a+b^{1/3}≤1.2.

If the value of 10a+b^{1/3} is within an appropriate range, the silicon element in the negative electrode and the fluorinated carbonate compound synergistically act to make the sodium secondary battery effectively inhibit the gas produced by the negative electrode, thereby reducing the gas produced during high-temperature storage of the battery, and improving the cycling stability of the battery.

In any embodiment, based on the total mass of the electrolyte solution, the mass fraction a of the fluorinated carbonate compound is 0.05%-12%, optionally, 1%-12%.

If the mass fraction a of the fluorinated carbonate compound is within an appropriate range, the fluorinated carbonate compound can not only cooperate with the silicate to reduce the silicate content in the negative electrode film layer and improve battery kinetic performance, but also act together with the silicate to form stable organic and inorganic components in the negative electrode SEI film, thereby reducing the gas produced by the unstable components in the negative electrode, reducing the gas produced rate after high-temperature storage of the battery, and comprehensively improving the cycling stability of the battery.

In any embodiment, based on the total mass of the negative electrode film layer, the mass fraction b of the silicon element in the negative electrode film layer is 1-3,000 ppm, optionally, 40-3,000 ppm, and optionally, 100-1,000 ppm.

If the mass fraction b of silicon in the negative electrode film layer is 40-3,000 ppm, the negative impact of excessively high silicon content on the capacity and impedance of the secondary battery can be reduced, and the role of the silicon element in inhibiting dendrites to reduce gas production can be played fully, thereby reducing gas production of the battery while improving the cycling stability of the battery. If the mass fraction b of silicon in the negative electrode film layer is 100-1,000 ppm, the negative impact of excessively high silicon content on the capacity and impedance of the secondary battery is further reduced, gas production is reduced, and the kinetic performance and cycling stability of the battery are improved.

In any embodiment, based on the total mass of the negative electrode film layer, the mass fraction of the silicon element in the negative electrode film layer is b; the negative electrode plate includes a negative electrode active material, and a ratio of an actual discharge specific capacity of the negative electrode active material, measured by a three-stage stepwise discharge method in which the negative electrode active material is first discharged at a rate of 0.05 C within a voltage range of 0.1-0.005 V, and then discharged at currents of 40 µA and 10 µA, to a theoretical discharge specific capacity of the negative electrode active material is c; and b and c meet: 5×10⁻⁵≤b/c≤9.5×10⁻³, optionally, 3.5×10⁻⁴≤b/c≤5×10⁻³.

A calcium element in the negative electrode film layer can induce sodium ions to deposit on the negative electrode, which helps to inhibit the formation of sodium dendrites, thereby reducing the unstable components caused by sodium dendrites. If the b/c value is within an appropriate range, by matching the silicon element in the negative electrode with the capacity of the negative electrode active material, the sodium secondary batteries can achieve both low gas production and high cycling stability while maintaining high energy density.

In any embodiment, the actual discharge specific capacity d of the negative electrode active material measured by the three-stage stepwise discharge method in which the negative electrode active material is first discharged at a rate of 0.05 C within a voltage range of 0.1-0.005 V, and then discharged at currents of 40 µA and 10 µA is 100-300 mAh/g, optionally, 140 -260 mAh/g.

If the actual discharge specific capacity d of the negative electrode active material measured by the three-stage stepwise discharge method in which the negative electrode active material is first discharged at a rate of 0.05 C within a voltage range of 0.1-0.005 V, and then discharged at currents of 40 µA and 10 µA is 100-300 mAh/g, sodium deposition on the negative electrode can be reduced, thereby reducing gas production at the negative electrode, reducing gas production after high-temperature storage of the battery, and improving the cycling stability of the battery. If the actual discharge specific capacity of the negative electrode active material measured by the three-stage stepwise discharge method in which the negative electrode active material is first discharged at a rate of 0.05 C within a voltage range of 0.1-0.005 V, and then discharged at currents of 40 µA and 10 µA is 140-260mAh/g, high energy density, low gas production, excellent kinetic performance, and cycling stability of the battery can be further balanced.

In any embodiment, the negative electrode active material includes hard carbon.

In any embodiment, the sodium secondary battery further includes a positive electrode plate, and the positive electrode plate includes a positive electrode active material.

In any embodiment, the positive electrode active material contains a copper element, and based on the total mass of the positive electrode active material, the mass fraction of the copper element is 0.01%-23%, optionally, 6.5%-18%.

The positive electrode active material containing the copper element has a more stable structure, which can further improve the kinetic performance and cycling stability of the battery. If the mass fraction of the copper element is within an appropriate range, the kinetic performance and cycling stability of the battery can be enhanced, and meanwhile, the problem that the copper element is transformed into Cu³⁺ under high voltage, leading to accelerated decomposition of the electrolyte solution due to its high oxidizing properties and increasing the gas production in the battery can be avoided. The mass fraction of the copper element is within the range of 6.5%-18%, thus the low gas production, excellent kinetic performance, and high cycling stability of the secondary battery can be further balanced.

In any embodiment, the positive electrode active material includes a sodium transition metal oxide, the sodium transition metal oxide includes NaₘCuₙXₒFeₚMn_{q}O_{2-s,} in which, X includes one or more selected from the group consisting of Li, Be, B, Mg, Al, K, Ca, Ti, Co, Ni, Zn, Ga, Sr, Y, Nb, Mo, In, Sn, Fe, and Ba, 0≤m≤0.5, 0≤n≤0.5, 0≤o<0.5, 0≤p≤0.5, 0<q≤0.68, n+o+p+q=1, 0≤s<0.2; optionally, the sodium transition metal oxide includes at least one selected from the group consisting of Na[Cu_{1/9}Ni_{2/9}Fe_{1/3}Mn_{1/3}]O₂, Na_{7/9}[Cu_{2/9}Fe_{1/9}Mn_{2/3}]O₂, and Na_{9/10}[Cu_{2/5}Fe_{1/10}Mn_{1/2}]O₂.

Sodium transition metal oxide positive electrode active materials have a high voltage, and the anion oxygen contributes to capacity while also plus producing a large amount of proton hydrogen, which accelerates the gas-producing oxidation of the unstable components on the negative electrode, resulting in severe gas production on the negative electrode. By the cooperation between the silicon element in the negative electrode film layer provided in the embodiment of the present application and the fluorinated carbonate compound in the electrolyte solution, the gas production of the battery is effectively reduced, and cycling stability of the battery is improved while the battery capacity and energy density are improved.

In any embodiment, the fluorinated carbonate compound includes a compound as shown in Formula I, 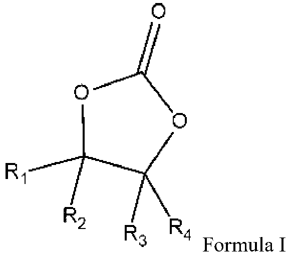 in which, R₁, R₂, R₃, and R₄ each independently include at least one selected from the group consisting of a hydrogen atom, a halogen atom, a C₁₋₆ alkyl group, a C₁₋₃ halogenated alkyl group, a C₁₋₃ alkoxy group, a C₁₋₃ halogenated alkoxy group, an ester group, a cyano group, a sulfonic acid group, or an isocyanate group; and at least one of R₁, R₂, R₃, or R₄ is a fluorine atom.

Cyclic fluorinated carbonates in which at least one of R₁, R₂, R₃, or R₄ is the fluorine atom is easy to be subjected to ring-opening reactions with negative electrode silicates, thus forming the stable components in the negative electrode SEI film, reducing gas production of the battery, and improving kinetic performance and cycling stability of the battery.

In any embodiment, the fluorinated carbonate compound includes at least one of the following compounds,

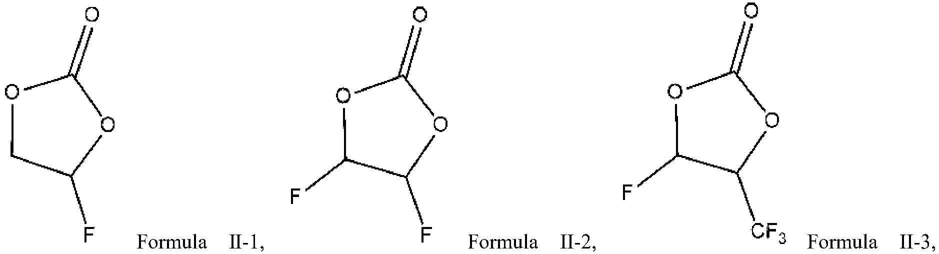

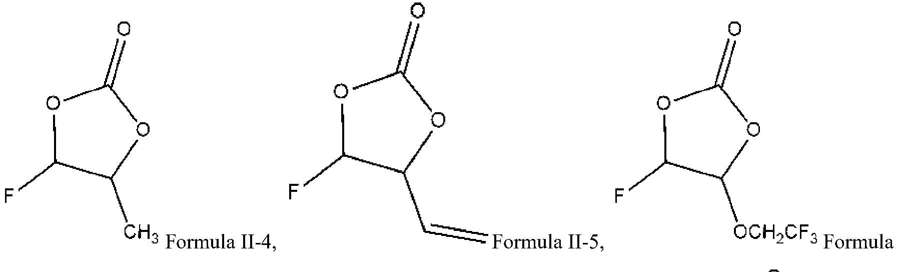

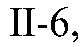

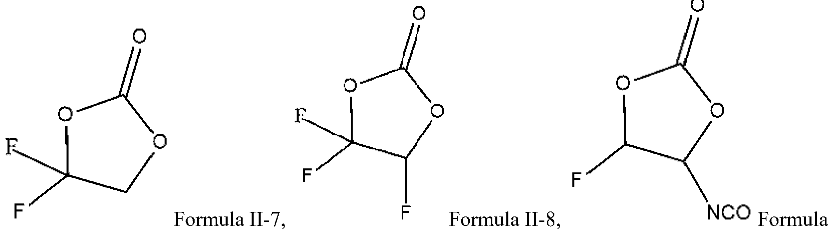

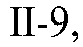

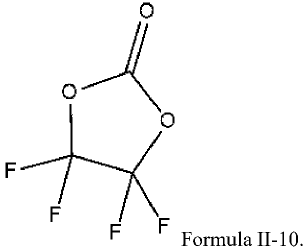

In any embodiment, the electrolyte solution further includes a second component, the second component is one or more of vinylene carbonate, vinylethylene carbonate, 1,3-propane sultone, 1,3-propene sultone, ethylene sulfate, maleic anhydride, succinic anhydride, triallyl phosphate, sodium bis(oxalato)borate, sodium tetrafluorophosphate, sodium difluoro-bis(oxalato)phosphate, sodium difluorophosphate, and sodium fluorosulfonate.

The components of the SEI film formed at the negative electrode interface of the sodium secondary battery mainly include sodium alkyl carbonate and sodium carbonate. However, compared with lithium alkyl carbonate, sodium alkyl carbonate has a higher solubility in an electrolyte solvent, which makes the SEI film of the sodium secondary battery very unstable; continuous side reactions occur between the electrolyte solution and the negative electrode, resulting in poor cycling performance of the secondary battery. The second component containing unsaturated functional groups can preferentially reduce to form a film on the negative electrode prior to the solvent, and act together with the fluorinated carbonate compound and the silicon element at the negative electrode to inhibit the formation of easily soluble substances such as sodium alkyl carbonate, thereby reducing gas production of the battery and improving the kinetic performance and cycling stability of the battery.

In any embodiment, based on the total mass of the electrolyte solution, the mass fraction of the second component is 0.01%-10%, optionally, 0.1%-5%.

If the mass fraction of the second component is within the above range, the thickness of the SEI film can be controlled while the gas production of the battery is relieved, thereby achieving both low impedance and low gas production of the battery, and comprehensively enhancing the cycling stability of the battery.

In a second aspect, the present application provides an electrical apparatus, which includes the sodium secondary battery in the first aspect.

### BRIEF DESCRIPTION OF THE DRAWINGS

FIG. 1 is a schematic diagram of a charge-discharge curve test of a negative electrode plate according to an embodiment of the present application;
FIG. 2 is a schematic diagram of a sodium secondary battery according to an embodiment of the present application;
FIG. 3 is an exploded view of a sodium secondary battery in FIG. 2 according to an embodiment of the present application;
FIG. 4 is a schematic diagram of a battery module according to an embodiment of the present application;
Fig. 5 is a schematic diagram of a battery pack according to an embodiment of the present application;
FIG. 6 is an exploded view of a battery pack in FIG. 5 according to an embodiment of the present application; and
FIG. 7 is a schematic diagram of an electrical apparatus using a sodium secondary battery as a power source according to an embodiment of the present application.

### Reference numerals:

1 battery pack; 2 upper box; 3 lower box; 4 battery module; 5 secondary battery; 51 case; 52 electrode assembly; 53 cover plate.

### DETAILED DESCRIPTION

Embodiments of a sodium secondary battery and an electrical apparatus of the present application are specifically described below in detail with appropriate reference to the accompanying drawings. However, unnecessary detailed explanations may be omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit may be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, condition "A or B" is met by either of the following: A is true (or exists) and B is false (or does not exist); A is false (or non-existent) and B is true (or exists); or both A and B are true (or exist).

In existing technologies, it is generally believed that the gas production of sodium secondary batteries is mainly caused by the oxidation of electrolyte solutions by positive electrode active materials at a high voltage; therefore, in existing technologies, the solutions of coatings on the positive electrode active material and film-forming on the positive electrode surface are generally carried out to reduce gas production of the secondary batteries. During the research process, the applicant found that another important factor for gas production of the sodium secondary batteries is the negative electrode. Unlike lithium secondary batteries, sodium secondary batteries commonly use hard carbon as the negative electrode active materials, the capacity contribution of the hard carbon mainly includes two stages: in a first stage, the capacity within a voltage range of 1.5-0.1V (vs Na/Na⁺) is from the adsorption of Na⁺ at surface defects of the hard carbon; in a second stage, the capacity below 0.1V (vs Na/Na⁺) is from the filling of Na⁺ in micropores of the hard carbon. To increase negative electrode capacity, it is generally to increase the porosity of hard carbon in the existing technologies. However, a potential of Na⁺ filling in the micropores of the hard carbon is close to the potential (0 V) of sodium metal deposition; during charging, it easily leads to sodium deposition, and the deposited sodium dendrites are highly reactive and will react quickly with the electrolyte solution to produce a large amount of gas and unstable by-products, and these unstable by-products are prone to oxidative decomposition during discharge due to insufficient film-forming driving force with the increase of the potential of the negative electrode. Moreover, unstable organic-type by-products are easy to dissolve in the electrolyte solution, which makes the solid electrolyte interface (SEI) film undergo continuous cycles of dissolution and repair, resulting in gas production and degrading of the cycle performance of a cell. The SEI film on the negative electrode surface plays a key role in reducing gas production of the negative electrode; however, during the charge-discharge cycles of the battery, the SEI film is subjected to repeated dissolution and repair, which further leads to increased gas production and reduced cycling stability.

### [Sodium secondary battery]

Based on above, the present application provides a sodium secondary battery, which includes a negative electrode plate and an electrolyte solution; the negative electrode plate includes a negative electrode film layer; the negative electrode film layer contains a silicon element; and the electrolyte solution includes a first component, and the first component is a fluorinated carbonate compound.

The sodium secondary battery is a type of secondary battery that primarily works by the movement of sodium ions between a positive electrode and a negative electrode.

It is to be understood that the silicon element can be introduced into the negative electrode plate in any form. In some embodiments, the silicon element is introduced into the negative electrode plate in a form of SiO₂. In some embodiments, the silicon element is introduced into the negative electrode plate in a form of silicate.

The fluorinated carbonate compound refers to a compound that contains a carbonate group (-OC(O)O-) in which at least one hydrogen atom is replaced by a fluorine atom. It can be either a linear compound or a cyclic compound.

The silicon element introduced into the negative electrode film layer can induce the deposition of sodium ions, which helps inhibit the formation of sodium dendrites and reduces the oxidation gas produced by unstable components caused by sodium dendrites in a negative electrode, thereby decreasing the gas produced by the negative electrode during discharge, and reducing the volume expansion rate of the battery after high-temperature storage. However, the silicon element is easy to form silicates during the preparation process and during the cycling of the negative electrode, leading to high resistance in the battery and subsequently degrading the kinetic performance of the battery, especially its charging capability at low temperatures. The fluorinated carbonate compound introduced into the electrolyte solution can react with the silicate during cycling, thus reducing the silicate content, and jointly forming a stable solid electrolyte interphase (SEI) component on the negative electrode surface; and therefore, the negative impact of the silicon element on resistance can be reduced, the gas produced by the unstable components in the negative electrode is further decreased, comprehensively improving the cycling stability of the battery.

In some embodiments, based on the total mass of the electrolyte solution, the mass fraction of the fluorinated carbonate compound is a; and based on the total mass of the negative electrode film layer, the mass fraction of the silicon element in the negative electrode material film layer is b; and a and b meet: 0.07≤10a+b^{1/3}≤1.3, optionally, 0.13≤10a+b^{1/3}≤1.2.

In some embodiments, the value of 10a+b^{1/3} can be 0.07, 0.072, 0.087, 0.1, 0.134, 0.146, 0.167, 0.2, 0.244, 0.3, 0.4, 0.5, 0.567, 0.6, 0.7, 0.8, 0.9, 1.0, 1.067, 1.1, 1.2, 1.267, 1.3, or any value between them.

If the value of 10a+b^{1/3} is within an appropriate range, the silicon element in the negative electrode and the fluorinated carbonate compound synergistically act to make the sodium secondary battery effectively inhibit the gas produced by the negative electrode, thereby reducing the gas produced during high-temperature storage of the battery, and improving the cycling stability of the battery.

In some embodiments, based on the total mass of the electrolyte solution, the mass fraction a of the fluorinated carbonate compound is 0.05%-12%, optionally, 1%-12%.

In some embodiments, based on the total mass of the electrolyte, the mass fraction a of the fluorinated carbonate compound can be 0.05%, 0.1%, 0.2%, 0.5%, 1%, 2%, 3%, 4%, 5%, 6%, 7%, 8%, 9%, 10%, 11%, 12%, or any value between them.

If the mass fraction a of the fluorinated carbonate compound is within an appropriate range, the fluorinated carbonate compound can not only react with the silicate to reduce the fraction of silicate in the negative electrode and improve battery kinetic performance, but also act together with the silicate to form stable organic and inorganic components in the negative electrode SEI film, thereby reducing the gas produced by the unstable components in the negative electrode, reducing the gas produced rate after high-temperature storage of the battery, and comprehensively improving the cycling stability of the battery.

Based on the total mass of the electrolyte, the mass fraction a of the fluorinated carbonate compound is in the range of 1%-12%; a thickness of the SEI film formed by the fluorinated carbonate compound and the silicate on the negative electrode is within an appropriate range, thus achieving excellent kinetic performance, while further reducing the high-temperature gas generation rate of the battery and improving the cycling stability of the battery.

In some embodiments, based on the total mass of the negative electrode film layer, the mass fraction b of the silicon element in the negative electrode film layer is 1-3,000 ppm, optionally, 40-3,000 ppm, and optionally, 100-1,000 ppm.

In some embodiments, based on the total mass of the negative electrode film layer, the mass fraction b of the silicon element in the negative electrode film layer is 1 ppm, 40 ppm, 80 ppm, 100 ppm, 200 ppm, 300 ppm, 400 ppm, 500 ppm, 600 ppm, 700 ppm, 800 ppm, 900 ppm, 1000 ppm, 1500 ppm, 2000 ppm, 2500 ppm, 3000 ppm, or any value between them.

The ppm refers to one part per million here.

If the mass fraction b of silicon in the negative electrode film layer is 40-3,000 ppm, the negative impact of excessively high silicon content on the capacity and impedance of the secondary battery can be reduced, and the role of the silicon element in inhibiting dendrites to reduce gas production can be played fully, thereby reducing gas production of the battery while improving the cycling stability of the battery.

If the mass fraction b of silicon in the negative electrode film layer is 100-1,000 ppm, the negative impact of excessively high silicon content on the capacity and impedance of the secondary battery is further reduced, gas production is reduced, and the kinetic performance and cycling stability of the battery are improved.

In some embodiments, based on the total mass of the negative electrode film layer, the mass fraction of the silicon element in the negative electrode film layer is b; the negative electrode plate includes a negative electrode active material, and a ratio of an actual discharge specific capacity of the negative electrode active material, measured by a three-stage stepwise discharge method in which the negative electrode active material is first discharged at a rate of 0.05 C within a voltage range of 0.1-0.005 V, and then discharged at currents of 40 µA and 10 µA, to a theoretical discharge specific capacity of the negative electrode active material is c; and b and c meet: 5×10⁻⁵≤b/c≤9.5×10⁻³, optionally, 3.5×10⁻⁴≤b/c≤5×10⁻³.

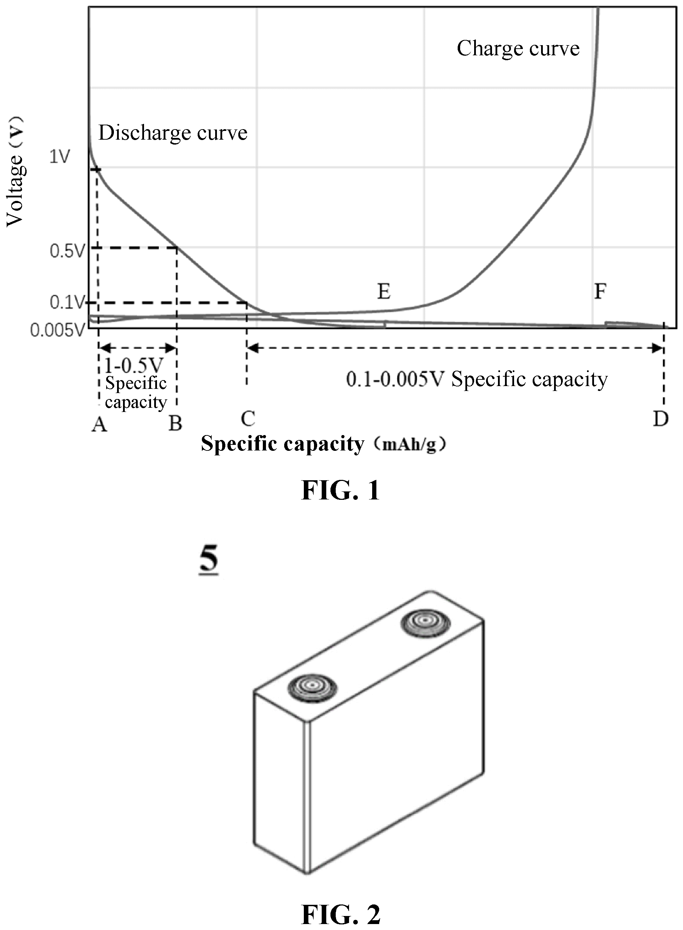

The discharge specific capacity of the negative electrode active material can be measured through a charge-discharge curve of a button cell. The testing method is a three-stage stepwise discharge method in which the negative electrode active material is first discharged at a rate of 0.05 C, and then discharged at currents of 40 µA and 10 µA, thus reducing the incomplete capacity contribution caused by polarization under high-rate discharge. As an example, the negative electrode plate of the sodium secondary battery is punched into small wafers with a diameter of 14 mm to serve as the positive electrode in the button cell, a metallic sodium plate is treated as the negative electrode, and 1.3 mol/L of a sodium hexafluorophosphate solution is treated as the electrolyte solution; the solvent in the electrolyte solution includes ethylene carbonate, dimethyl carbonate, and ethyl methyl carbonate with a mass ratio of 1:2:2; the button cell is assembled and subjected to constant current charge-discharge testing within the voltage range of 0.005-2 V, and a schematic diagram of the charge-discharge curve is shown in FIG. 1. During discharging, the button cell is discharged to 0.005 V at a rate of 0.05 C under constant current and then is stood until the voltage recovers to a stable value E; then, the button cell is discharged to 0.005 V at a rate of 40 µA under a constant current and then is stood until the voltage recovers to a stable value F, and then the button cell is discharged to 0.005 V at a rate of 10 µA under constant current; and during charging, the button cell is charged to 2 V at a rate of 0.05 C under constant current. In the second cycle of the above charge-discharge process, the total discharge capacity (mAh) within the voltage range of 0.1-0.005 V divided by the mass (g) of the negative electrode active material in the negative electrode plate is defined as the actual discharge specific capacity (mAh/g) of the negative electrode active material within 0.1-0.05 V. As shown in FIG. 1, the difference between the specific capacity D during discharging to 0.005 V at a rate of 10 µA under constant current of and the specific capacity C at 0.1 V in the discharge curve is the discharge specific capacity (mAh/g) of the negative electrode active material within the voltage range of 0.1-0.005 V voltage range. The charge-discharge curves can be measured using any electrochemical testing system in this field; and as an example, the curves are obtained using the Land testing system CT3002A 1U model instrument.

In some embodiments, the negative electrode active material includes hard carbon, which has a theoretical discharge specific capacity of 300 mAh/g.

In some embodiments, the value of b/c can be 5×10⁻⁵, 5.45×10⁻⁵, 1.36×10⁻⁴, 3×10⁻⁴, 3.5×10⁻⁴, 3.57×10⁻⁴, 4.09×10⁻⁴, 6.1×10⁻⁴, 9×10⁻⁴, 1.36×10⁻³, 4.09×10⁻³, 9×10⁻³, 9.5×10⁻³, or any value between them.

The silicon element in the negative electrode film layer can induce sodium ions to deposit on the negative electrode, which helps to inhibit the formation of sodium dendrites, thereby reducing the unstable components caused by sodium dendrites. If the b/c value is within an appropriate range, by matching the silicon element in the negative electrode with the capacity of the negative electrode active material, the sodium secondary batteries can achieve both low gas production and high cycling stability while maintaining high energy density.

In any embodiment, the actual discharge specific capacity d of the negative electrode active material measured by the three-stage stepwise discharge method in which the negative electrode active material is first discharged at a rate of 0.05 C within a voltage range of 0.1-0.005 V, and then discharged at currents of 40 µA and 10 µA is 100-300 mAh/g, optionally, 140-260 mAh/g.

In any embodiment, the actual discharge specific capacity d of the negative electrode active material measured by the three-stage stepwise discharge method in which the negative electrode active material is first discharged at a rate of 0.05 C within a voltage range of 0.1-0.005 V, and then discharged at currents of 40 µA and 10 µA is 100 mAh/g, 148 mAh/g, 180 mAh/g, 200 mAh/g, 252 mAh/g, 300 mAh/g, or any value between them.

The actual discharge specific capacity of the negative electrode active material measured by the three-stage stepwise discharge method in which the negative electrode active material is first discharged at a rate of 0.05 C within a voltage range of 0.1-0.005 V, and then discharged at currents of 40 µA and 10 µA can be regulated by changing the negative electrode material, such as the preparation process of hard carbon. As an example, by changing the pyrolysis temperature, the pore size and content of the negative electrode active material can be adjusted to achieve the regulation over the capacity of the negative electrode material within different voltage ranges. Increasing the temperature in pyrolysis helps induce the formation of ordered micropores in hard carbon, thereby increasing the actual discharge specific capacity of the negative electrode active material within the voltage range of 0.1-0.005 V.

If the actual discharge specific capacity d of the negative electrode active material measured by the three-stage stepwise discharge method in which the negative electrode active material is first discharged at a rate of 0.05 C within a voltage range of 0.1-0.005 V, and then discharged at currents of 40 µA and 10 µA is 100-300 mAh/g, sodium deposition on the negative electrode can be reduced, thereby reducing gas production at the negative electrode, reducing gas production after high-temperature storage of the battery, and improving the cycling stability of the battery. If the actual discharge specific capacity d of the negative electrode active material measured by the three-stage stepwise discharge method in which the negative electrode active material is first discharged at a rate of 0.05 C within a voltage range of 0.1-0.005 V, and then discharged at currents of 40 µA and 10 µA is 140-260mAh/g, high energy density, low gas production, excellent kinetic performance, and cycling stability of the battery can be further balanced.

In some embodiments, the negative electrode active material includes one or more of hard carbon, metallic sodium, sodium-tin alloy, or metal oxides.

In some embodiments, the negative electrode active material includes the hard carbon.

In some embodiments, the hard carbon is a negative electrode active material with a particle size of 2-20 µm prepared by calcining biomass material at 600-1,000°C for 1-5 h in an inert atmosphere, grinding for 1-4 h, and then calcining a second time at 1,100-1,800 °C for 2-8 h in an inert atmosphere.

In some implementations, the biomass materials include one or more selected from the group consisting of peanut shells, straw, sawdust, walnut shells, bagasse, rice bran, wheat husks, coconut shells, apricot shells, wood, lignin, and paper-making waste.

In some embodiments, the temperature in the first calcination can be selected from the group consisting of 600°C, 700°C, 800°C, 900°C, 1,000°C, or any value within the range between any two of them.

In some embodiments, the single calcination can be carried out for 1 h, 2 h, 3 h, 4 h, 5 h, or any value within the range between any two of them.

In some embodiments, the grinding can be carried out for 1 h, 2 h, 3 h, 4 h, or any value within the range between any two of them.

In some embodiments, the temperature in secondary calcination can be selected from the group consisting of 1,100°C, 1,200°C, 1,300°C, 1,400°C, 1,500°C, 1,600°C, 1,700°C, 1,800°C, or any value within the range between any two of them.

In some embodiments, the secondary calcination can be carried out for 2 h, 3 h, 4 h, 5 h, 6 h, 7 h, 8 h, or any value within the range between any two of them.

In some embodiments, the particle size of the hard carbon is 2 µm, 5 µm, 10 µm, 15 µm, 20 µm, or any value within the range between any two of them.

In some embodiments, the sodium secondary battery further includes a positive electrode plate, and the positive electrode plate includes a positive electrode active material.

In some embodiments, the positive electrode active material contains a copper element, and based on the total mass of the positive electrode active material, the mass fraction of the copper element is 0.01%-23%, optionally, 6.5%-18%.

In some embodiments, based on the total mass of the positive electrode active material, the mass fraction of the copper element can be 0.01%, 1%, 5%, 6.5%, 10%, 13%, 15%, 18%, 20%, 23%, or any value between them.

The positive electrode active material containing the copper element has a more stable structure, and can further improve the kinetic performance and cycling stability of the battery.

If the mass fraction of the copper element is within an appropriate range, the kinetic performance and cycling stability of the battery can be enhanced, and meanwhile, the problem that the copper element is transformed into Cu³⁺ under high voltage, leading to accelerated decomposition of the electrolyte solution due to its high oxidizing properties and increasing the gas production in the battery can be avoided. The mass fraction of the copper element is within the range of 6.5%-18%, thus the low gas production, excellent kinetic performance, and high cycling stability of the secondary battery can be further balanced.

In some embodiments, the positive electrode active material can be the well-known positive electrode active material for thee battery in the art. As an example, the positive electrode active material can include at least one of the following materials: Prussian blue analogs, sodium-containing phosphates, sodium-containing transition metal oxides, or modified compounds thereof. However, the present application is not limited to these materials, and other conventional materials that can be used as the positive electrode active material of the battery can also be used. These positive electrode active materials can be independently used, or more than two are combined to use. The Prussian blue analog is NaxP[R(CN)₆]_{δ}·zH₂O, in which, P and R are each independently selected from at least one transition metal element, 0<x≤2, 0<δ≤1, and 0≤z≤10; the sodium-containing phosphate is Na_{b}Me_{c}(PO₄)_{d}O₂X, in which, A is one or more selected from the group consisting of H, Li, Na, K, and NH₄, Me is one or more selected from the group consisting of Ti, Cr, Mn, Fe, Co, Ni, V, Cu, and Zn, X is one or more selected from the group consisting of F, Cl, and Br, 0<b≤4, 0<c≤2, 1≤d≤3; the sodium-containing transition metal oxide is NaₐM_{b}N_{c}Fe_{d}MnₑO2, in n which, M and N include at least one element from the group consisting of Sc, Ti, V, Cr, Co, Ni, Cu, Zn, Zr, Nb, Mo, Sn, Hf, Ta, W, and Pb, 0.05≤b≤0.2, 0.2≤c≤0.3, 0.2≤d≤0.3, 0.3≤e≤0.4, 0.75≤a/(b+c+d+e)≤1.

In some embodiments, the positive electrode active material includes a sodium transition metal oxide, the sodium transition metal oxide includes NaₘCuₙXₒFeₚMn_{q}O_{2-s,} in which, X includes one or more selected from the group consisting of Li, Be, B, Mg, Al, K, Ca, Ti, Co, Ni, Zn, Ga, Sr, Y, Nb, Mo, In, Sn, Fe, and Ba, 0≤m≤0.5, 0≤n≤0.5, 0≤o<0.5, 0≤p≤0.5, 0<q≤0.68, n+o+p+q=1, 0≤s<0.2.

Sodium transition metal oxide positive electrode active materials have a high voltage, and the anion oxygen contributes to capacity while also plus producing a large amount of proton hydrogen, which accelerates the gas-producing oxidation of the unstable components on the negative electrode, resulting in severe gas production on the negative electrode. By the cooperation between the silicon element in the negative electrode film layer provided in the embodiment of the present application and the fluorinated carbonate compound in the electrolyte solution, the gas production of the battery is effectively reduced, and cycling stability of the battery is improved while the battery capacity and energy density are improved.

In some embodiments, the sodium transition metal oxide includes at least one selected from the group consisting of Na[Cu_{1/9}Ni_{2/9}Fe_{1/3}Mn_{1/3}]O₂, Na_{7/9}[Cu_{2/9}Fe_{1/9}Mn_{2/3}]O₂, and Na_{9/10}[Cu_{2/5}Fe_{1/10}Mn_{1/2}]O₂.

In some embodiments, the fluorinated carbonate compound includes a compound as shown in Formula I, 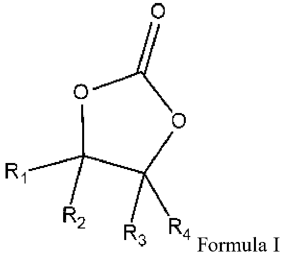 in which, R₁, R₂, R₃, and R₄ each independently include at least one selected from the group consisting of a hydrogen atom, a halogen atom, a C₁₋₆ alkyl group, a C₁₋₃ halogenated alkyl group, a C₁₋₃ alkoxy group, a C₁₋₃ halogenated alkoxy group, an ester group, a cyano group, a sulfonic acid group, or an isocyanate group; and at least one of R₁, R₂, R₃, or R₄ is a fluorine atom.

The term "halogen atom" here refers to elements of Group VIIA in the periodic system, including, but not limited to: F, Cl, Br, I.

The term "C₁₋₆ hydroxy group" here refers to a group containing carbon and hydrogen atoms with 1-6 carbon atoms. In some embodiments, the C₁₋₆ hydroxy group does not include unsaturated bonds and are alkyl groups; by way of example, the hydroxy group includes, but is not limited to, methyl, ethyl, propyl, isopropyl, 2-methyl-1-propyl, 2-methyl-2-propyl, 2-methyl-1-butyl, 3-methyl-1-butyl, 2-methyl-3-butyl, 2,2-dimethyl-1-propyl, 2-methyl-1-pentyl, 3-methyl-1-pentyl, 4-methyl-1-pentyl, 2-methyl-2-pentyl, 3-methyl-2-pentyl, 4-methyl-2-pentyl, 2,2-dimethyl-1-butyl, 3,3-dimethyl-1-butyl, 2-ethyl-1-butyl, butyl, isobutyl, tert-butyl, pentyl, isopentyl, neopentyl, and hexyl. In some embodiments, the C₁₋₆ hydroxy group includes unsaturated bonds and are cycloalkyl, alkenyl, alkynyl, or aryl groups; and by way of example, the C₁₋₆ hydroxy group includes, but is not limited to, cyclopropyl, cyclobutyl, vinyl, 1-propenyl or 2-propenyl, phenyl, and naphthyl.

The term "C₁₋₃ halogenated alkyl group" here refers to a C₁₋₃ alkyl in which at least one hydrogen atom is replaced by a halogen atom; by way of example, it includes, but is not limited to: -CF₃, -CF₂CH₂, and -CF₂CH₂CH₃.

The term "C₁₋₃ alkoxy group" refers to a C₁₋₃ alkyl group connected to the main carbon chain through an oxygen atom; and by way of example, it includes, but is not limited to: methoxy (CH₃O-), ethoxy (C₂H₅O-), and propoxy (C₃H₇O-).

The term "C₁₋₃ halogenated alkoxy group" here refers to a C₁₋₃ alkoxy group in which at least one hydrogen atom is substituted with a halogen atom.

The term "ester group" here refers to the -COO- group.

The term "cyano group" here refers to the -CN group.

The term "sulfonic acid group" here refers to the -SO₃H group.

The term "isocyanate group" here refers to the -NCO group.

Cyclic fluorinated carbonates in which at least one of R₁, R₂, R₃, or R₄ is the fluorine atom is easy to be subjected to ring-opening reactions with negative electrode silicates, thus forming the stable components in the negative electrode SEI film, reducing gas production of the battery, and improving kinetic performance and cycling stability of the battery.

In some embodiments, the fluorinated carbonate compound includes at least one of the following compounds,

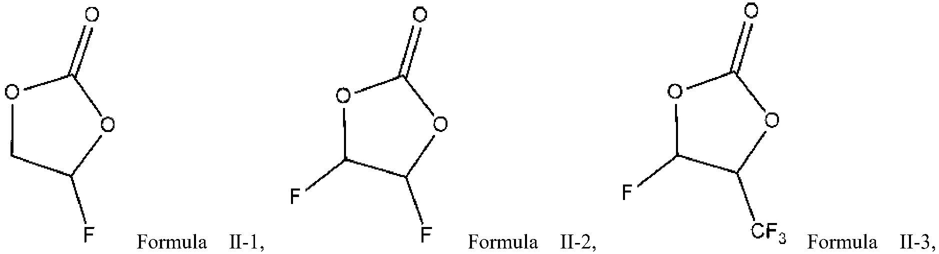

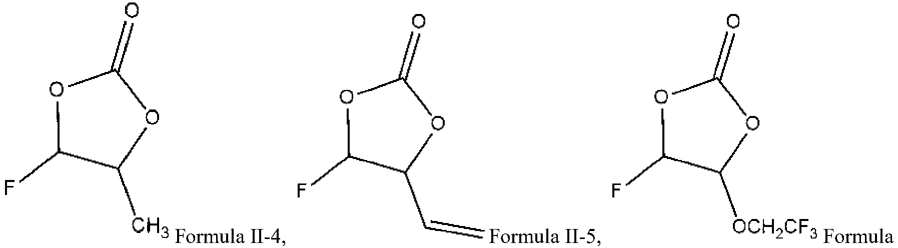

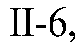

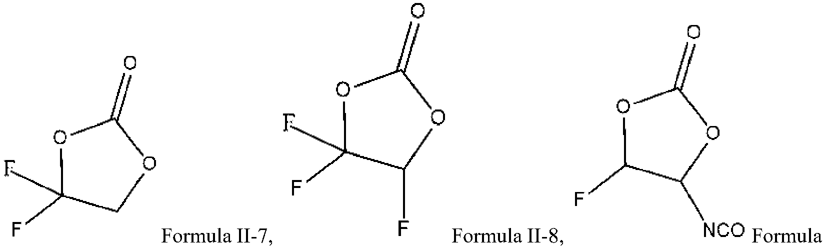

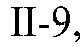

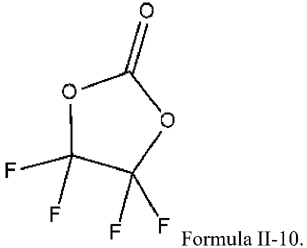

In some embodiments, the electrolyte solution further includes a second component, the second component is one or more of vinylene carbonate, vinylethylene carbonate, 1,3-propane sultone, 1,3-propene sultone, ethylene sulfate, maleic anhydride, succinic anhydride, triallyl phosphate, sodium bis(oxalato)borate, sodium tetrafluorophosphate, sodium difluoro-bis(oxalato)phosphate, sodium difluorophosphate, and sodium fluorosulfonate.

The components of the SEI film formed at the negative electrode interface of the sodium secondary battery mainly include sodium alkyl carbonate and sodium carbonate. However, compared with lithium alkyl carbonate, sodium alkyl carbonate has a higher solubility in an electrolyte solvent, which makes the SEI film of the sodium secondary battery very unstable; continuous side reactions occur between the electrolyte solution and the negative electrode, resulting in poor cycling performance of the secondary battery. The second component containing unsaturated functional groups can preferentially reduce to form a film on the negative electrode prior to the solvent, and act together with the fluorinated carbonate compound and the silicon element at the negative electrode to inhibit the formation of easily soluble substances such as sodium alkyl carbonate, thereby reducing gas production of the battery and improving the kinetic performance and cycling stability of the battery.

In some embodiments, based on the total mass of the electrolyte solution, the mass fraction of the second component is 0.01%-10%, optionally, 0.1%-5%.

In any embodiment, based on the total mass of the electrolyte solution, the mass fraction of the second component is 0.01%, 0.1%, 1%, 2%, 3%, 4%, 5%, 6%, 7%, 8%, 9%, 10%, or any value between them.

If the mass fraction of the second component is within the above range, the thickness of the SEI film can be controlled while the gas production of the battery is relieved, thereby achieving both low impedance and low gas production of the battery, and comprehensively enhancing the cycling stability of the battery.

In some embodiments, the electrolyte solution includes an electrolyte salt, and the electrolyte salt is at least one selected from from the group consisting of NaPF₆, NaBF₄, NaN(SO₂F)₂(NaFSI), NaClO₄, NaAsF₆, NaB(C₂O₄)₂(NaBOB), NaBF₂(C₂O₄)(NaDFOB), NaN(SO₂RF)₂, and NaN(SO₂F)(SO₂RF), in which, RF refers to C_{b}F_{2b+1}, b is an integer of 1-10, optionally, an integer of 1-3. In some embodiments, the electrolyte salt is one or more selected from the group consisting of NaPF₆, NaN(SO₂F)₂, NaClO₄, NaN(CF₃SO₂)₂, NaB(C₂O₄)₂, and NaBF₂(C₂O₄). In some embodiments, the electrolyte salt is one or more selected from the group consisting of NaPF₆, NaClO₄, NaN(SO₂RF)₂, and NaBF₂(C₂O₄). In some embodiments, RF is -CF₃, -C₂F₅ or -CF₂CF₂CF₃.

In some embodiments, the electrolyte solution includes a solvent, and the solvent includes at least one selected from the group consisting of chain carbonates, chain carboxylates, cyclic carbonic acid, ether solvents, sulfone solvents, and nitrile solvents. In some embodiments, the chain carbonates include at least one selected from the group consisting of dimethyl carbonate (DMC), diethyl carbonate (DEC), ethyl methyl carbonate (EMC), methyl propyl carbonate (MPC), methyl isopropyl carbonate (MIPC), methyl butyl carbonate, ethyl propyl carbonate, dipropyl carbonate, and dibutyl carbonate. In some embodiments, the chain carbonates include at least one selected from the group consisting of dimethyl carbonate (DMC), diethyl carbonate (DEC), ethyl methyl carbonate (EMC), and methyl propyl carbonate (MPC). In some embodiments, the chain carboxylates include at least one selected from the group consisting of methyl formate (MF), ethyl formate (EF), methyl propionate (MP), ethyl propionate (EP), propyl propionate (PP), ethyl butyrate (EB), methyl acetate (MA), ethyl acetate (EA), and propyl acetate (PA). In some embodiments, the chain carboxylates include at least one selected from the group consisting of methyl propionate (MP), ethyl propionate (EP), propyl propionate (PP), methyl acetate (MA), ethyl acetate (EA), and propyl acetate (PA). In some embodiments, the ether solvents include at least one selected from the group consisting of dioxolame (DOL), tetrahydrofuran (THF), 2-methyltetrahydrofuran (2Me-THF), tetrahydropyran (THP), 1,2-dimethoxyethane (DME), diethylene glycol dimethyl ether (DG), 1,2-diethoxyethane, and 1,2-dibutoxyethane.

### [Positive electrode plate]

The positive electrode plate usually includes a positive electrode current collector and a positive electrode film layer provided on at least one surface of the positive electrode current collector, and the positive electrode film layer includes a positive electrode active material.

As an example, the positive electrode current collector has two opposite surfaces in a thickness direction thereof, and the positive electrode film layer is provided on either or both of the opposite surfaces of the positive electrode current collector.

In some embodiments, the positive electrode current collector may be a metal foil or a composite current collector. For example, an aluminum foil may be used as the metal foil. The composite current collector may include a polymer base layer and a metal layer formed on at least one surface of the polymer base layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder and any other components, for preparing the positive electrode plate in a solvent (such as N-methyl pyrrolidone) to form a positive electrode slurry; and coating the positive electrode slurry on the positive electrode current collector, and performing drying and cold pressing processes to obtain the positive electrode plate.

### [Negative electrode plate]

The negative electrode plate includes a negative electrode current collector and a negative electrode film layer arranged on at least one surface of the negative electrode current collector, where the negative electrode film layer includes a negative electrode active material.

As an example, the negative electrode current collector has two surfaces opposite in its own thickness direction, and the negative electrode film layer is arranged on either one or both of the two opposite surfaces of the negative electrode current collector.

In some embodiments, electrode current collector can be a metal foil or a composite current collector. For example, if it is the metal foil, a copper foil or an aluminum foil can be adopted. The composite current collector may include a polymer material substrate and a metal layer formed on at least one surface of the polymer material substrate. The composite current collector can be formed by forming a metal material (copper, copper alloy, aluminum, aluminum alloy, nickel, nickel alloy, titanium, titanium alloy, silver, silver alloy and the like) on a polymer material substrate (polypropylene (PP), polyethylene terephthalate (PET), polybutylene terephthalate (PBT), Polystyrene (PS), Polyethylene (PE) and the like).

In some embodiments, the negative electrode film layer optionally includes the binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other component, for preparing the negative electrode plate in a solvent (such as deionized water) to form a negative electrode slurry; and coating the negative electrode slurry on the negative electrode current collector, and performing drying and cold pressing processes to obtain the negative electrode plate.

### [Separator]

In some embodiments, the secondary battery further comprises a separator. The type of the separator is not particularly limited in the present application, and any well-known separator with a porous structure having good chemical stability and mechanical stability can be selected.

In some embodiments, the material of the separator may be selected from at least one of the group consisting of glass fibers, non-woven fabric, polyethylene, polypropylene, and polyvinylidene fluoride. The separator may be either a single-layer thin film or a multilayer composite thin film without special limitations. When the separator is a multilayer composite thin film, the materials of the layers may be the same or different without special limitations.

In some embodiments, the positive electrode plate, the negative electrode plate, and the separator may be made into an electrode assembly by a winding process or a lamination process.

In some embodiments, the secondary battery may include an outer package. The outer package can be used for encapsulating the aforementioned electrode assembly and electrolyte.

In some embodiments, the outer package of the secondary battery may be a hard shell, such as a hard plastic shell, an aluminum shell, or a steel shell. The outer package of the secondary battery may also be a soft package, such as a pouch-type soft package. The material of the soft package can be plastic, such as polypropylene, polybutylene terephthalate, and polybutylene succinate.

In the present application, the shape of the sodium secondary battery includes, but is not limited to, cylindrical, square or any other shape. For example, in FIG. 2, a sodium secondary battery 5 of a square structure is taken as an example.

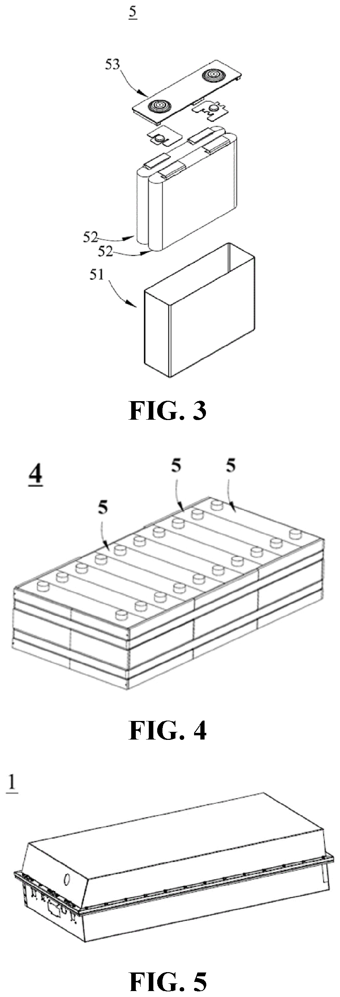

In some embodiments, with reference to FIG. 3, the outer package can include a case 51 and a cover plate 53. Here, the case 51 can include a bottom plate and a side plate connected to the bottom plate, with the bottom plate and the side plate enclosing to form an accommodating cavity. The case 51 has an opening in communication with the accommodating cavity, and the cover plate 53 may cover the opening to close the accommodating cavity. The positive electrode plate, the negative electrode plate and the separator may be formed into an electrode assembly 52 by a winding process or a stacking process. The electrode assembly 52 is encapsulated in the accommodating cavity. An electrolyte infiltrates the electrode assembly 52. One or more electrode assemblies 52 are in the sodium secondary battery 5, and the number can be selected by those skilled in the art according to specific actual requirements.

In some embodiments, the sodium secondary battery can be assembled into the battery module, one or more sodium secondary batteries are in the battery module, and the specific number can be selected by those skilled in the art according to the application and the capacity of the battery module.

In FIG. 4, a battery module 4 is taken as an example. With reference to FIG. 4, in the battery module 4, a plurality of sodium secondary batteries 5 can be sequentially arranged in the length direction of the battery module 4. Definitely, they can also be arranged according to any other mode. Further, the plurality of sodium secondary batteries 5 can be further fixed by fasteners.

Optionally, the battery module 4 can also include a shell with an accommodating space, and the plurality of sodium secondary batteries 5 are accommodated in the accommodating space.

In some examples, the battery modules can also be assembled into a battery pack, one or more battery modules can be in the battery pack, and the specific number can be selected by those skilled in the art according to the application and the capacity of the battery pack.

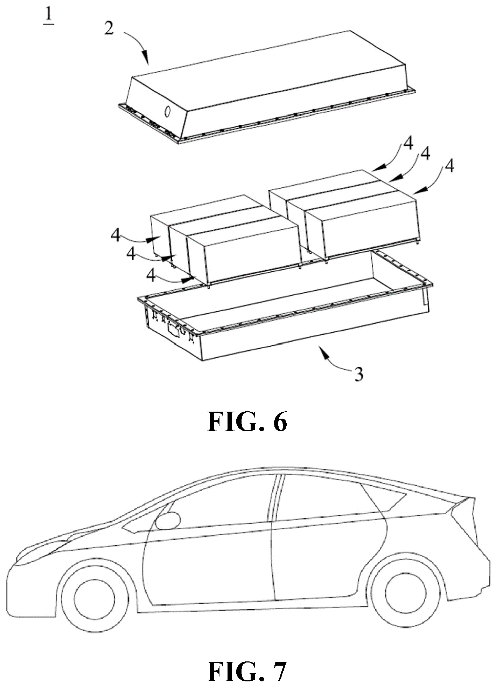

Fig. 5 and Fig. 6 are a battery pack 1 as an example. Referring to Fig. 5 and Fig. 6, the battery pack 1 may include a battery box and a plurality of battery modules 4 arranged in the battery box. The battery box includes an upper box body 2 and a lower box body 3. The upper box body 2 can cover the lower box body 3 to form enclosed space for accommodating the battery modules 4. The plurality of battery modules 4 can be arranged in the battery box in any mode.

In addition, the present application further provides an electric device, and the electric device includes at least one of the sodium secondary battery, the battery module, or the battery pack provided by the present application. The sodium secondary battery, the battery module or the battery pack can be used as a power supply for the electric device and can also be used as an energy storage unit for the electric device. The electric device can include a mobile device (such as a mobile phone, and a notebook computer), an electric vehicle (such as a pure electric vehicle, a hybrid electric vehicle, a plug-in hybrid electric vehicle, an electric bicycle, an electric scooter, an electric golf cart, and an electric truck), an electric train, a ship, a satellite, an energy storage system and the like, but not limited thereto.

For the electrical apparatus, the sodium secondary battery, the battery module or the battery pack can be selected according to the use requirements.

In FIG. 7, the electrical apparatus is taken as an example. The electric device is the pure electric vehicle, the hybrid electric vehicle, the plug-in hybrid electric vehicle or the like. In order to meet the requirements of the electrical apparatus on high power and high energy density of the sodium secondary battery, the battery pack or the battery module can be adopted.

The apparatus serving as another example can be the mobile phone, tablet, laptop, etc. The device is generally required to be light and thin, so the sodium secondary battery can be adopted as the power supply.

### Examples

Examples of the present application will be described below. The Examples described below are illustrative and only used to explain the present application, and cannot be construed as limiting the present application. In Examples in which no specific technologies or conditions are specified, technologies or conditions described in the literature in the art or product specifications are followed. Where manufacturers are not specified, the reagents or instruments used are conventional products and are commercially available.

### I. Preparation method

### Example 1:

### 1) Preparation of electrolyte solution

In an argon-atmosphere glove box (H₂O content <10 ppm, O₂ content <1 ppm), sodium hexafluorophosphate (NaPF₆) and fluoroethylene carbonate are dissolved in organic solvents of ethylene carbonate (EC) and ethyl methyl carbonate (EMC) (mass ratio of EC: EMC = 3:7), and are stirred evenly to obtain an electrolyte solution with a sodium salt concentration of 1 mol/L. Based on the total mass of the electrolyte solution, the mass fraction of fluoroethylene carbonate is 1%.

### 2) Preparation of positive electrode active material

Preparation of Na_{7/9}Cu_{2/9}Fe_{1/9}Mn_{2/3}O₂: 0.39 mol of Na₂CO₃, 0.22 mol of CuO, 0.06 mol of Fe₂O₃, and 0.67 mol of MnO₂ precursors are milled by a ball mill using ethanol as a dispersant for 12 h; after being dried, the uniformly mixed powder is pressed into tablets at 20 MPa and sintered at 900°C for 12 h; and it is needed to quickly transfer the sintered powder to the glove box for storage.

### 3) Preparation of positive electrode plate C

The positive electrode active material Na_{7/9}Cu_{2/9}Fe_{1/9}Mn_{2/3}O₂, a conductive agent acetylene black, and a binder polyvinylidene fluoride (PVDF) are mixed at a weight ratio of 90:5:5 in an N-methyl pyrrolidone solvent system, and are stirred thoroughly to obtain a positive electrode slurry; the positive electrode slurry is uniformly coated at an amount of 0.28 g (dry weight)/1,540.25 mm² on an aluminum foil being 13 µm in thickness and serving as a positive electrode current collector; and after being air-dried at room temperature, the aluminum foil is transferred to a 120°C oven and dried for 1 h, and then is subjected to cold pressing and slitting to obtain the positive electrode plate.

### 4) Preparation of negative electrode active material

The biomass material coconut shells are calcined at 800°C for 2 h in a tube furnace with an argon atmosphere, and then are washed with hydrochloric acid and deionized water and dried; after being ground for 2 h, the biomass material coconut shells are calcined at 1,500°C for 4 h in the tube furnace with the argon atmosphere to obtain a target negative electrode active material H1 with a particle size of 10 µm; and testing shows that the actual discharge specific capacity of the negative electrode active material measured by the three-stage stepwise discharge method in which the negative electrode active material is first discharged at a rate of 0.05 C within a voltage range of 0.1-0.005 V, and then discharged at currents of 40 µA and 10 µA is 220 mAh/g; and the specific testing method is described below.

### 5) Preparation of negative electrode plate C

The negative electrode active material H1, the conductive agent acetylene black, the binder styrene-butadiene rubber (SBR), and a thickener sodium carboxymethyl cellulose (CMC-Na) are fully uniformly mixed in a mass ratio of 90:4:4:2 by stirring in a deionized water solvent system, then a certain amount of SiO₂ is added so that the mass fraction of silicon in the dry material (i.e., the total mass of negative electrode active material H1, the conductive agent acetylene black, the binder styrene-butadiene rubber (SBR), the thickener sodium carboxymethyl cellulose (CMC-Na), and SiO₂) is 300 ppm, and finally a negative electrode slurry is obtained; the negative electrode slurry is uniformly coated at 0.14 g (dry weight)/1,540.25 mm² onto the copper foil being 8 µm in thickness and serving as a negative electrode current collector; after being air-dried at room temperature, the copper foil is transferred to a 120°C oven and dried for 1 h, then is subjected to cold pressing and slitting to obtain the negative electrode plate.

### 6) Separator

A 9 µm polyethylene (PE) porous polymer film is used as a separator.

### 7) Preparation of battery

The positive electrode plate, the separator, and the negative electrode plate are stacked in sequence, the separator is between the positive electrode plate and the negative electrode plate so as to isolate the positive electrode plate from the negative electrode plate; and then positive electrode plate, the separator, and the negative electrode plate are wound to obtain a bare cell; tabs are welded, the bare cell is placed in an outer package, the prepared electrolyte solution is injected into the dried cell, and then the processes of sealing, standing, formation, shaping, and capacity testing are carried out to obtain the sodium secondary battery product in an Example 1.

The preparation method for the sodium secondary battery in Examples 2 to 4 is basically the same as the preparation method in the Example 1, except that the type of the fluorinated carbonate compound was adjusted; and specific parameters are shown in Table 1.

The preparation method for the sodium secondary battery in Examples 5 to 9 is basically the same as the preparation method in the Example 1, except that the mass fraction of the fluorinated carbonate compound was adjusted; and specific parameters are shown in Table 1.

The preparation method for the sodium secondary battery in Examples 10 to 13 is basically the same as the preparation method in the Example 1, except that the mass proportion of the silicon element in the negative electrode film layer was adjusted by adding different amounts of SiO₂ to the negative electrode slurry; and the specific parameters are shown in Table 2.

The preparation method for the sodium secondary battery in Examples 14 to 17 is basically the same as the preparation method in the Example 1, except that the preparation process for the negative electrode active material and the negative electrode plate was adjusted so as to adjust the actual discharge specific capacity of the negative electrode active material in the negative electrode plate within the voltage range of 0.1-0.005V; the specific parameters are shown in Table 2, and the preparation process is as follows:
In the Example 14, the actual discharge specific capacity of the negative electrode active material in the negative electrode plate A measured by the three-stage stepwise discharge method in which the negative electrode active material is first discharged at a rate of 0.05 C within a voltage range of 0.1-0.005 V, and then discharged at currents of 40 µA and 10 µA was 100mAh/g; the detailed testing method is described in the following testing methods; the preparation method for the negative electrode plate is as follows:
the biomass material coconut shells were calcined at 800°C for 2 h in the tube furnace with the argon atmosphere, and then were washed with hydrochloric acid and deionized water and dried; after being ground for 2 h, the biomass material coconut shells were calcined at 1,150°C for 2 h in the tube furnace with the argon atmosphere to obtain a target negative electrode active material H2 with a particle size of 2 µm;
the negative electrode active material H2, the conductive agent acetylene black, the binder styrene-butadiene rubber (SBR), and the thickener sodium carboxymethyl cellulose (CMC-Na) were fully uniformly mixed in a mass ratio of 90:4:4:2 by stirring in the deionized water solvent system, then a certain amount of SiO₂ was added so that the mass fraction of silicon in the dry material was 300 ppm, and finally the negative electrode slurry was obtained; the negative electrode slurry was uniformly coated at 0.14 g (dry weight)/1,540.25 mm² onto the copper foil being 8 µm in thickness and serving as a negative electrode current collector; and after being air-dried at room temperature, the copper foil was transferred to a 120°C oven and dried for 1 h, then was subjected to cold pressing and slitting to obtain the negative electrode plate.

In the Example 15, the actual discharge specific capacity of the negative electrode active material in the negative electrode plate B measured by the three-stage stepwise discharge method in which the negative electrode active material is first discharged at a rate of 0.05 C within a voltage range of 0.1-0.005 V, and then discharged at currents of 40 µA and 10 µA was 148mAh/g; the detailed testing method is described in the following testing methods; the preparation method for the negative electrode plate is as follows:
The negative electrode active materials (60wt% H1 and 40wt% H2), the conductive agent acetylene black, the binder styrene-butadiene rubber (SBR), and the thickener sodium carboxymethyl cellulose (CMC-Na) were fully uniformly mixed in a mass ratio of 90:4:4:2 by stirring in the deionized water solvent system, then a certain amount of SiO₂ was added so that the mass fraction of silicon in the dry material was 300 ppm, and finally the negative electrode slurry was obtained; the negative electrode slurry was uniformly coated at 0.14 g (dry weight)/1,540.25 mm² onto the copper foil being 8 µm in thickness and serving as a negative electrode current collector; and after being air-dried at room temperature, the copper foil was transferred to a 120°C oven and dried for 1 h, then was subjected to cold pressing and slitting to obtain the negative electrode plate.

In the Example 16, the actual discharge specific capacity of the negative electrode active material in the negative electrode plate E measured by the three-stage stepwise discharge method in which the negative electrode active material is first discharged at a rate of 0.05 C within a voltage range of 0.1-0.005 V, and then discharged at currents of 40 µA and 10 µA was 300mAh/g; the detailed testing method is described in the following testing methods; the preparation method for the negative electrode plate is as follows:
the biomass material coconut shells were calcined at 800°C for 2 h in the tube furnace with the argon atmosphere, and then were washed with hydrochloric acid and deionized water and dried; after being ground for 2 h, the biomass material coconut shells were calcined at 1,650°C for 6 h in the tube furnace with the argon atmosphere to obtain a target negative electrode active material H3 with a particle size of 20 µm.

The negative electrode active material H3, the conductive agent acetylene black, the binder styrene-butadiene rubber (SBR), and the thickener sodium carboxymethyl cellulose (CMC-Na) were fully uniformly mixed in a mass ratio of 90:4:4:2 by stirring in the deionized water solvent system, then a certain amount of SiO₂ was added so that the mass fraction of silicon in the dry material was 300 ppm, and finally the negative electrode slurry was obtained; the negative electrode slurry was uniformly coated at 0.14 g (dry weight)/1,540.25 mm² onto the copper foil being 8 µm in thickness and serving as a negative electrode current collector; and after being air-dried at room temperature, the copper foil was transferred to a 120°C oven and dried for 1 h, then was subjected to cold pressing and slitting to obtain the negative electrode plate.

In the Example 17, the actual discharge specific capacity of the negative electrode active material in the negative electrode plate D measured by the three-stage stepwise discharge method in which the negative electrode active material is first discharged at a rate of 0.05 C within a voltage range of 0.1-0.005 V, and then discharged at currents of 40 µA and 10 µA was 252 mAh/g; the detailed testing method is described in the following testing methods; the preparation method for the negative electrode plate is as follows:
The negative electrode active materials (40wt% H1 and 60wt% H3), the conductive agent acetylene black, the binder styrene-butadiene rubber (SBR), and the thickener sodium carboxymethyl cellulose (CMC-Na) were fully uniformly mixed in a mass ratio of 90:4:4:2 by stirring in the deionized water solvent system, then a certain amount of SiO₂ was added so that the mass fraction of silicon in the dry material was 300 ppm, and finally the negative electrode slurry was obtained; the negative electrode slurry was uniformly coated at 0.14 g (dry weight)/1,540.25 mm² onto the copper foil being 8 µm in thickness and serving as a negative electrode current collector; and after being air-dried at room temperature, the copper foil was transferred to a 120°C oven and dried for 1 h, then was subjected to cold pressing and slitting to obtain the negative electrode plate.

The preparation method for the sodium secondary battery in an Example 18 is basically the same as the preparation method in the Example 14, except that the mass proportion of silicon in the negative electrode film layer was adjusted by adjusting the amount of silicon dioxide added.

The preparation method for the sodium secondary battery in Examples 19 to 22 is basically the same as the preparation method in the Example 1, except that the preparation process for the positive electrode active material and the positive electrode plate was adjusted so as to adjust the mass fraction of the copper element in the positive electrode active material; the specific parameters are shown in Table 2, and the preparation process is as follows:
in the Example 19, the mass fraction of the copper element in the positive electrode active material in the positive electrode plate A was 0%, and the preparation method is as follows:
preparation of Na_{1/2}Fe_{1/2}Mn_{1/2}O₂: 0.25 mol of Na₂CO₃, 0.25 mol of Fe₂O₃, and 0.5 mol of MnO₂ precursors were milled by the ball mill using ethanol as the dispersant for 12 h; after being dried, the uniformly mixed powder was pressed into tablets at 20 MPa and sintered at 900°C for 12 h; and it was needed to quickly transfer the sintered powder to the glove box for storage.

The positive electrode active material Na_{1/2}Fe_{1/2}Mn_{1/2}O₂, the conductive agent acetylene black, and the binder polyvinylidene fluoride (PVDF) were mixed at a weight ratio of 90:5:5 in the N-methyl pyrrolidone solvent system, and were stirred thoroughly to obtain the positive electrode slurry; the positive electrode slurry was uniformly coated at an amount of 0.28 g (dry weight)/1,540.25 mm² on the aluminum foil being 13 µm in thickness and serving as the positive electrode current collector; and after being air-dried at room temperature, the aluminum foil was transferred to a 120°C oven and dried for 1 h, and then was subjected to cold pressing and slitting to obtain the positive electrode plate.

In the Example 20, the mass fraction of the copper element in the positive electrode active material in the positive electrode plate was 6.5%, and the preparation method is as follows:
The positive electrode active materials (50wt% Na_{1/2}Fe_{1/2}Mn_{1/2}O₂ and 50wt% Na_{7/9}Cu_{2/9}Fe_{1/9}Mn_{2/3}O₂), the conductive agent acetylene black, and the binder polyvinylidene fluoride (PVDF) were mixed at a weight ratio of 90:5:5 in the N-methyl pyrrolidone solvent system, and were stirred thoroughly to obtain the positive electrode slurry; the positive electrode slurry was uniformly coated at an amount of 0.28 g (dry weight)/1,540.25 mm² on the aluminum foil being 13 µm in thickness and serving as the positive electrode current collector; and after being air-dried at room temperature, the aluminum foil was transferred to a 120°C oven and dried for 1 h, and then was subjected to cold pressing and slitting to obtain the positive electrode plate.

In the Example 21, the mass fraction of the copper element in the positive electrode active material in the positive electrode plate E was 23%, and the preparation method is as follows:
preparation of Na_{9/10}Cu_{2/5}Fe_{1/10}Mn_{1/2}O₂: 0.45 mol of Na₂CO₃, 0.4 mol of CuO, 0.05 mol of Fe₂O₃, and 0.5 mol of MnO₂ precursors were milled by the ball mill using ethanol as the dispersant for 12 h; after being dried, the uniformly mixed powder was pressed into tablets at 20 MPa and sintered at 900°C for 12 h; and it was needed to quickly transfer the sintered powder to the glove box for storage.

The positive electrode active material Na_{9/10}Cu_{2/5}Fe_{1/10}Mn_{1/2}O₂, the conductive agent acetylene black, and the binder polyvinylidene fluoride (PVDF) were mixed at a weight ratio of 90:5:5 in the N-methyl pyrrolidone solvent system, and were stirred thoroughly to obtain the positive electrode slurry; the positive electrode slurry was uniformly coated at an amount of 0.28 g (dry weight)/1,540.25 mm² on the aluminum foil being 13 µm in thickness and serving as the positive electrode current collector; and after being air-dried at room temperature, the aluminum foil was transferred to a 120°C oven and dried for 1 h, and then was subjected to cold pressing and slitting to obtain the positive electrode plate.

In the Example 22, the mass fraction of the copper element in the positive electrode active material in the positive electrode plate D was 18%, and the preparation method is as follows:
The positive electrode active materials (50wt% Na_{7/9}Cu_{2/9}Fe_{1/9}Mn_{2/3}O₂ and 50wt% Na_{9/10}Cu_{2/5}Fe_{1/10}Mn_{1/2}O₂), the conductive agent acetylene black, and the binder polyvinylidene fluoride (PVDF) were mixed at a weight ratio of 90:5:5 in the N-methyl pyrrolidone solvent system, and were stirred thoroughly to obtain the positive electrode slurry; the positive electrode slurry was uniformly coated at an amount of 0.28 g (dry weight)/1,540.25 mm² on the aluminum foil being 13 µm in thickness and serving as the positive electrode current collector; and after being air-dried at room temperature, the aluminum foil was transferred to a 120°C oven and dried for 1 h, and then was subjected to cold pressing and slitting to obtain the positive electrode plate.

The preparation methods for the sodium secondary battery in Examples 23 to 25 are basically the same as the preparation method in the Example 1, except that the second component was added; and specific parameters are shown in Table 1.

The preparation method for the sodium secondary battery in a Contrast Example 1 is basically the same as that in the Example 1, except that no fluoroethylene carbonate was added and SiO₂ was not added to the negative electrode slurry; and specific parameters are shown in Table 1.

The preparation method for the sodium secondary battery in the Contrast Example 2 is basically the same as that in the Example 1, except that fluoroethylene carbonate was not added.

The preparation method for the sodium secondary battery in a Contrast Example 3 is basically the same as that in the Example 5, except that SiO₂ was not added to the negative electrode slurry.

### II. Test method

### 1. Volume expansion rate under high-temperature storage at 60°C

At 25°C, the sodium secondary batteries prepared in the examples and the contrast examples were stood for 5 min and then were charged to 4.0V at a rate of 1 under constant current; then the sodium secondary batteries were charged at constant voltage charging until the current was less than or equal to 0.05 C and then were stood for 5 min and finally were discharged to 1.5 V at a rate of 1 C under constant current; the battery volume V1 was measured by a water drainage method; then the battery was placed in a 60°C oven for storage for 2 months; the battery was taken out, the volume was tested as V2, and the battery volume expansion rate was = (V2 - V1) / V1 × 100%.

### 2. Charge performance at low temperature of -10°C

A three-electrode battery with a reference was prepared, and the reference electrode was sodium vanadium phosphate; at 25°C, the battery was charged at a rate of 0.12 C under constant current until the voltage reached 4.0V and then charged at constant voltage until the current was less than or equal to 0.05 C; then the battery was stood for 5 min and then discharged to 1.5 V at a rate of 0.12 C under constant current, and the discharge capacity was recorded as C1; then, the battery was placed in an environment at -10°C and stood for 2 h; the battery was charged at a rate of 0.12 C under constant current until the voltage reached 4.0V, and the charge capacity before the negative electrode potential relative to the reference reached -3.377V was recorded as C2; and the charge capability of the battery at - 10°C was = C2/C1 × 100%.

### 3. Test of discharge capacity of negative electrode active material at 0.1-0.005 V

The negative electrode plates in the contrast examples and the examples were punched into small wafers with a diameter of 14 mm to serve as the positive electrodes in the button cell, metallic sodium plates were treated as the negative electrodes, polypropylene films were treated as the separators, and 1.3 mol/L of sodium hexafluorophosphate solution was treated as the electrolyte solution; the solvent in the electrolyte solution included ethylene carbonate, dimethyl carbonate, and ethyl methyl carbonate with a mass ratio of 1:2:2; the button cell was assembled for electrolyte solution test; during discharging, the button cell was discharged to 0.005 V at a rate of 0.05 C under constant current and then was stood until the voltage recovered to a stable value ; then, the button cell was discharged to 0.005 V at a rate of 40 µA under a constant current and then was stood until the voltage recovered to the stable value, and then the button cell was discharged to 0.005 V at a rate of 10 µA under constant current; and during charging, the button cell was charged to 2 V at a rate of 0.05 C under constant current; in the second cycle of the above charge-discharge process, the total discharge capacity (mAh) within the voltage range of 0.1-0.005 V divided by the mass (g) of the negative electrode active material in the negative electrode plate was defined as the actual discharge specific capacity (mAh/g) of the negative electrode active material within 0.1-0.005 V.

### 4. Determination of mass fraction of Si element in negative electrode film layer

The mass fraction of the Si element in the negative electrode film layer can be tested with reference to General Rule EPA 6010D-2014, and inductively coupled plasma atomic emission spectroscopy is utilized to test. The mass of the silicon element in a negative electrode film layer sample divided by the mass of the negative electrode film layer sample is taken as the mass fraction of the silicon element in the negative electrode film layer.

### 5. Determination of mass fraction of element Cu in positive electrode active material

The mass fraction of the Cu element in the positive electrode active material can be tested with reference to General Rule EPA 6010D-2014, and inductively coupled plasma atomic emission spectroscopy is utilized to test. The mass of the copper element in a positive electrode active material sample divided by the mass of the positive electrode active material sample is taken as the mass of the copper element in the positive electrode active material.

### 6. Cycle capacity retention rate of battery

At 25°C, the prepared battery was charged to 4.0 V at a rate of 0.33 C under constant current and then charged at a constant voltage of 4.0 V until the current dropped to 0.05 C, and after being stood for 5 min, the battery was discharged to 1.5 V at a rate of 1C under constant current, and such operation was the first charge-discharge cycle of the battery, and the discharge capacity in this cycle was recorded as the discharge capacity (C0) of the battery in the first cycle; the above steps were repeated for the same battery, and after the 400th cycle, the discharge capacity (C1) of the battery was measured; and the capacity retention after 400 cycles was = C1/C0 × 100%.

### 7. Mass energy density

Capacity test of battery cell: the battery cell was stood at 25°C for 2 h until the temperature of the battery cell reached 25°C. At 25°C, the battery cell was charged at 0.1 C until reaching a charge cut-off voltage, then the battery well was continuously charged at constant voltage under the cut-off voltage until the current reached 0.05 C, and then the charge was stopped (C referring the rated capacity of the battery cell). The battery cell was stood at 25°C for 1 h. At 25°C, the battery cell was discharged at 0.1 C until reaching a discharge cut-off voltage, and the total discharge capacity C0 and the total discharge energy E0 of the battery cell were recorded.

Battery cell weight measurement: the battery cell was placed on an electronic balance until the weight stabilized, and the battery cell weight value M0 was read;

Energy density calculation: the battery cell discharge energy E0/ battery cell weight M0 was the energy density of the single battery cell.

### III. Analysis of test results of each example and contrast example

The batteries in each example and contrast example were prepared respectively according to the above method, and various performance parameters were measured. The results are shown in Table below.

**Table 1**

| No. | Electrode plate | | Electrolyte solution | | | |
|---|---|---|---|---|---|---|
| | | | First component | | Second component | |
| | Positive electrode plate | Negative electrode plate | Composition | Mass fraction a/% | Composition | Mass fraction/ % |
| Example 1 | Positive electrode plate C | Negative electrode plate C | Formula II-1 | 1 | / | / |
| Example 2 | Positive electrode plate C | Negative electrode plate C | Formula II-2 | 1 | / | / |
| Example 3 | Positive electrode plate C | Negative electrode plate C | Formula II-5 | 1 | / | / |
| Example 4 | Positive electrode plate C | Negative electrode plate C | Formula II-10 | 1 | / | / |
| Example 5 | Positive electrode plate C | Negative electrode plate C | Formula II-1 | 0.05 | / | / |
| Example 6 | Positive electrode plate C | Negative electrode plate C | Formula II-1 | 0.2 | / | / |
| Example 7 | Positive electrode plate C | Negative electrode plate C | Formula II-1 | 5 | / | / |
| Example 8 | Positive electrode plate C | Negative electrode plate C | Formula II-1 | 10 | / | / |
| Example 9 | Positive electrode plate C | Negative electrode plate C | Formula II-1 | 12 | / | / |
| Example 10 | Positive electrode plate C | Negative electrode plate C | Formula II-1 | 1 | / | / |
| Example 11 | Positive electrode plate C | Negative electrode plate C | Formula II-1 | 1 | / | / |
| Example 12 | Positive electrode plate C | Negative electrode plate C | Formula II-1 | 1 | / | / |
| Example 13 | Positive electrode plate C | Negative electrode plate C | Formula II-1 | 1 | / | / |
| Example 14 | Positive electrode plate C | Negative electrode plate A | Formula II-1 | 1 | / | / |
| Example 15 | Positive electrode plate C | Negative electrode plate B | Formula II-1 | 1 | / | / |
| Example 16 | Positive electrode plate C | Negative electrode plate E | Formula II-1 | 1 | / | / |
| Example 17 | Positive electrode plate C | Negative electrode plate D | Formula II-1 | 1 | / | / |
| Example 18 | Positive electrode plate C | Negative electrode plate A | Formula II-1 | 1 | / | / |
| Example 19 | Positive electrode plate A | Negative electrode plate C | Formula II-1 | 1 | / | / |
| Example 20 | Positive electrode plate B | Negative electrode plate C | Formula II-1 | 1 | / | / |
| Example 21 | Positive electrode plate E | Negative electrode plate C | Formula II-1 | 1 | / | / |
| Example 22 | Positive electrode plate D | Negative electrode plate C | Formula II-1 | 1 | / | / |
| Example 23 | Positive electrode plate C | Negative electrode plate C | Formula II-1 | 1 | Maleic anhydride | 1 |
| Example 24 | Positive electrode plate C | Negative electrode plate C | Formula II-1 | 1 | Triallyl phosphate | 1 |
| Example 25 | Positive electrode plate C | Negative electrode plate C | Formula II-1 | 1 | Vinylene carbonate | 1 |
| Contrast Example 1 | Positive electrode plate C | Negative electrode plate F | / | 0 | / | / |
| Contrast Example 2 | Positive electrode plate C | Negative electrode plate C | / | 0 | / | / |
| Contrast Example 3 | Positive electrode plate C | Negative electrode plate F | Formula II-1 | 0.05 | / | / |

**Table 2**

| No. | Negative electrode plate | | | | | Positive electrode plate |
|---|---|---|---|---|---|---|
| | Mass fraction of Si b/ppm | 10a+b^{1/3} | Actual discharge capacity d at 0.1-0.005 V mAh/g | Ratio c of actual discharge capacity to theoretical specific capacity at 0.1-0.005 V | b/c | Mass content of Cu/% |
| Example 1 | 300 | 0.17 | 220 | 0.73 | 4.09E-04 | 13 |
| Example 2 | 300 | 0.17 | 220 | 0.73 | 4.09E-04 | 13 |
| Example 3 | 300 | 0.17 | 220 | 0.73 | 4.09E-04 | 13 |
| Example 4 | 300 | 0.17 | 220 | 0.73 | 4.09E-04 | 13 |
| Example 5 | 300 | 0.07 | 220 | 0.73 | 4.09E-04 | 13 |
| Example 6 | 300 | 0.09 | 220 | 0.73 | 4.09E-04 | 13 |
| Example 7 | 300 | 0.57 | 220 | 0.73 | 4.09E-04 | 13 |
| Example 8 | 300 | 1.07 | 220 | 0.73 | 4.09E-04 | 13 |
| Example 9 | 300 | 1.27 | 220 | 0.73 | 4.09E-04 | 13 |
| Example 10 | 40 | 0.13 | 220 | 0.73 | 5.45E-05 | 13 |
| Example 11 | 100 | 0.15 | 220 | 0.73 | 1.36E-04 | 13 |
| Example 12 | 1000 | 0.20 | 220 | 0.73 | 1.36E-03 | 13 |
| Example 13 | 3000 | 0.24 | 220 | 0.73 | 4.09E-03 | 13 |
| Example 14 | 300 | 0.17 | 100 | 0.33 | 9.00E-04 | 13 |
| Example 15 | 300 | 0.17 | 148 | 0.49 | 6.08E-04 | 13 |
| Example 16 | 300 | 0.17 | 300 | 1.00 | 3.00E-04 | 13 |
| Example 17 | 300 | 0.17 | 252 | 0.84 | 3.57E-04 | 13 |
| Example 18 | 3000 | 0.24 | 100 | 0.33 | 9.00E-03 | 13 |
| Example 19 | 300 | 0.17 | 220 | 0.73 | 4.09E-04 | 0 |
| Example 20 | 300 | 0.17 | 220 | 0.73 | 4.09E-04 | 6.5 |
| Example 21 | 300 | 0.17 | 220 | 0.73 | 4.09E-04 | 23 |
| Example 22 | 300 | 0.17 | 220 | 0.73 | 4.09E-04 | 18 |
| Example 23 | 300 | 0.17 | 220 | 0.73 | 4.09E-04 | 13 |
| Example 24 | 300 | 0.17 | 220 | 0.73 | 4.09E-04 | 13 |
| Example 25 | 300 | 0.17 | 220 | 0.73 | 4.09E-04 | 13 |
| Contrast Example 1 | / | / | 220 | 0.73 | / | 13 |
| Contrast Example 2 | 300 | 0.07 | 220 | 0.73 | 4.09E-04 | 13 |
| Contrast Example 3 | / | 0.005 | 220 | 0.73 | / | 13 |
| Note: *, E refers to a scientific notation of powers of 10, 4.09E-04 is 4.09×10⁻⁴. | | | | | | |

**Table 3**

| No. | Battery | | |
|---|---|---|---|
| | Volume expansion ratio of battery after storage at 60°C/% | Charge performance at -10°C/% | Cycle retention rate after 400 cycles/% |
| Example 1 | 16.2 | 84.3 | 81.5 |
| Example 2 | 15.9 | 84.6 | 82.1 |
| Example 3 | 15.7 | 84.8 | 82.4 |
| Example 4 | 15.4 | 84.9 | 82.8 |
| Example 5 | 35.2 | 80.1 | 68.3 |
| Example 6 | 32.2 | 81.7 | 70.2 |
| Example 7 | 15.1 | 84.2 | 82.1 |
| Example 8 | 15.9 | 82.1 | 80.8 |
| Example 9 | 18.3 | 79.7 | 74.1 |
| Example 10 | 16.7 | 82.3 | 80.3 |
| Example 11 | 16.4 | 82.9 | 81 |
| Example 12 | 15.9 | 83.9 | 81.4 |
| Example 13 | 15.8 | 79.2 | 78.7 |
| Example 14 | 15.2 | 87.7 | 84.7 |
| Example 15 | 16.8 | 86.8 | 83.1 |
| Example 16 | 24.5 | 78.1 | 76.3 |
| Example 17 | 16.9 | 82.1 | 80.5 |
| Example 18 | 14.6 | 81.4 | 81.1 |
| Example 19 | 13.7 | 83.3 | 80.9 |
| Example 20 | 14.5 | 83.8 | 81.3 |
| Example 21 | 19.4 | 81.2 | 84.6 |
| Example 22 | 17.1 | 84.1 | 83.7 |
| Example 23 | 13.2 | 89.5 | 85.1 |
| Example 24 | 13.1 | 88.3 | 85.8 |
| Example 25 | 12.5 | 89.6 | 89.3 |
| Contrast Example 1 | 42.1 | 75.4 | 59.7 |
| Contrast Example 2 | 39.1 | 77.6 | 64.2 |
| Contrast Example 3 | 37.2 | 78.2 | 65.3 |

**Table 4**

| No. | Battery energy density (Wh/Kg) |
|---|---|
| Example 1 | 145.7 |
| Example 10 | 145.9 |
| Example 11 | 145.8 |
| Example 12 | 144.1 |
| Example 13 | 143.4 |
| Example 14 | 138.1 |
| Example 15 | 140.8 |
| Example 16 | 153.1 |
| Example 17 | 146.1 |
| Example 18 | 136.3 |

According to the above results, the sodium secondary batteries in the Examples 1 to 25 all include the negative electrode plates and the electrolyte solutions; the negative electrode plates include the negative electrode film layers; the negative electrode film layers contain the silicon elements; and the electrolyte solutions include the first components, and the first components are the fluorinated carbonate compounds.

The comparison between the Examples 1 to 25 and the contrast examples showed that in the sodium secondary battery in the present application, the silicon element in the negative electrode and the fluorinated carbonate compound synergistically act to reduce the volume expansion rate of the battery after high-temperature storage and improve the cycle capacity retention rate of the battery at room temperature.

According to the Example 1 and the Examples 5 to 9, based on the total mass of the electrolyte solution, if the mass fraction a of fluoroethylene carbonate in the electrolyte solution was 0.05%-12%, the battery showed a low volume expansion rate after high-temperature storage, and excellent low-temperature charge performance and cycle capacity retention at room temperature. If the mass fraction a of fluoroethylene carbonate in the electrolyte solution was 1%-12%, the battery maintained excellent low-temperature charge performance, the storage volume expansion rate after high-temperature storage was further reduced, and the cycle capacity retention rate was improved.

The comparison between the Contrast Example 1 and the Contrast Example 2 and the comparison between the Example 5 and the Contrast Example 3 showed that the negative electrode film layer of the sodium secondary battery containing an appropriate amount of silicon element could reduce the volume expansion rate of the battery after high-temperature storage, improve the low-temperature charging performance of the battery, and enhance the cycle capacity retention rate at room temperature.

According to the Example 1 and the Examples 10 to 13, based on the total mass of the negative electrode film layer, if the mass fraction b of the silicon element in the negative electrode material film layer was 40-3000 ppm, the battery showed a low volume expansion rate after high-temperature storage, excellent energy density, and cycle capacity retention rate at room temperature. If the mass fraction b of the silicon element was 100-1000 ppm, the battery could maintain low volume expansion rate after high-temperature storage, high energy density, and even better low-temperature charge performance as well as cycle capacity retention rate at room temperature.

According to the Example 1 and the Examples 5 to 13, if a and b meet: 0.07≤10a+b^{1/3}≤1.3, the battery showed a low volume expansion rate after high-temperature storage and cycle capacity retention rate at room temperature. If a and b meet: 0.13≤10a+b^{1/3}≤1.2, the volume expansion rate of the battery after high-temperature storage could be further reduced, and the cycle capacity retention rate at room temperature could be improved.

According to the Example 1 and the Examples 14 to 17, if the actual discharge specific capacity d of the negative electrode active material measured by the three-stage stepwise discharge method in which the negative electrode active material was first discharged at a rate of 0.05 C within a voltage range of 0.1-0.005 V, and then discharged at currents of 40 µA and 10 µA was 100-300 mAh/g, the battery showed a low volume expansion rate after high-temperature storage, excellent cycle capacity retention rate at room temperature and energy density. If the actual discharge specific capacity d of the negative electrode active material measured by the three-stage stepwise discharge method in which the negative electrode active material was first discharged at a rate of 0.05 C within a voltage range of 0.1-0.005 V, and then discharged at currents of 40 µA and 10 µA was 140 mAh/g-260 mAh/g, the battery could maintain low volume expansion rate after high-temperature storage, and excellent low-temperature charge performance, cycle capacity retention rate at room temperature and energy density.

According to the Examples 10 to 18, a ratio of the actual discharge specific capacity of the negative electrode active material, measured by the three-stage stepwise discharge method in which the negative electrode active material is first discharged at a rate of 0.05 C within a voltage range of 0.1-0.005 V, and then discharged at currents of 40 µA and 10 µA, to the theoretical discharge specific capacity of the negative electrode active material is c; and if b and c meet: 5×10⁻⁵≤b/c≤9.5×10⁻³, the battery could maintain low volume expansion rate after high-temperature storage, and excellent cycle capacity retention rate at room temperature. If b and c meet: 3.5×10⁻⁴≤b/c≤5×10⁻³, the battery could maintain low volume expansion rate after high-temperature storage, and excellent low-temperature charge performance, cycle capacity retention rate at room temperature and energy density.

According to the Example 1 and the Examples 19 to 22, based on the total mass of the positive electrode active material, if the mass fraction of the copper element was 0%-23%, the battery showed a low volume expansion rate after high-temperature storage, and excellent low-temperature charge performance and cycle capacity retention rate at room temperature. If the mass fraction of the copper element was 6.5%-18%, the battery maintained a low volume expansion rate after high-temperature storage and excellent low-temperature charge performance and cycle capacity retention rate at room temperature.

According to the Example 1 and the Examples 23 to 25, the electrolyte solution contained the second component, thus further optimizing the volume expansion rate of the battery after high-temperature storage, low-temperature charge performance, and cycling stability.

It is to be noted that the present application is not limited to the above embodiments. The above embodiments are only examples, and embodiments that have the same composition and exert the same effect as the technical ideas within the scope of the technical solution of the present application are included in the technical scope of the present application. In addition, other methods that apply various deformations that can be conceived by those skilled in the art to the examples and construct them by combining some of the constituent elements of the embodiments are also included in the scope of the present application, within the scope of the application that do not deviate from the main purpose of the present application.

## Claims

1. A sodium secondary battery, comprising:
a negative electrode plate comprising a negative electrode film layer, the negative electrode film layer containing a silicon element; and
an electrolyte solution comprising a first component, the first component being a fluorinated carbonate compound.

2. The sodium secondary battery according to claim 1, wherein
based on the total mass of the electrolyte solution, the mass fraction of the fluorinated carbonate compound is a; and based on the total mass of the negative electrode film layer, the mass fraction of the silicon element in the negative electrode film layer is b; and a and b meet: 0.07≤10a+b^{1/3}≤1.3.

3. The sodium secondary battery according to claim 2, wherein
a and b meet: 0.13≤10a+b^{1/3}≤1.2.

4. The sodium secondary battery according to claim 1, wherein
based on the total mass of the electrolyte solution, the mass fraction a of the fluorinated carbonate compound is 0.05%-12%.

5. The sodium secondary battery according to claim 1, wherein
based on the total mass of the electrolyte solution, the mass fraction a of the fluorinated carbonate compound is 1%-12%.

6. The sodium secondary battery according to claim 1, wherein
based on the total mass of the negative electrode film layer, the mass fraction b of the silicon element in the negative electrode film layer is 1-3,000 ppm.

7. The sodium secondary battery according to claim 1, wherein
based on the total mass of the negative electrode film layer, the mass fraction b of the silicon element in the negative electrode film layer is 40-3,000 ppm.

8. The sodium secondary battery according to claim 1, wherein
based on the total mass of the negative electrode film layer, the mass fraction b of the silicon element in the negative electrode film layer is 100-1,000 ppm.

9. The sodium secondary battery according to claim 1, wherein
based on the total mass of the negative electrode film layer, the mass fraction of the silicon element in the negative electrode film layer is b;
the negative electrode plate comprises a negative electrode active material, and a ratio of an actual discharge specific capacity of the negative electrode active material, measured by a three-stage stepwise discharge method in which the negative electrode active material is first discharged at a rate of 0.05 C within a voltage range of 0.1-0.005 V, and then discharged at currents of 40 µA and 10 µA, to a theoretical discharge specific capacity of the negative electrode active material is c; and b and c meet: 5×10⁻⁵≤b/c≤9.5×10⁻³.

10. The sodium secondary battery according to claim 9, wherein b and c meet: 3.5×10⁻⁴≤b/c≤5×10⁻³.

11. The sodium secondary battery according to claim 9, wherein
the actual discharge specific capacity d of the negative electrode active material measured by the three-stage stepwise discharge method in which the negative electrode active material is first discharged at a rate of 0.05 C within a voltage range of 0.1-0.005 V, and then discharged at currents of 40 µA and 10 µA is 100-300 mAh/g.

12. The sodium secondary battery according to claim 9, wherein
the actual discharge specific capacity d of the negative electrode active material measured by the three-stage stepwise discharge method in which the negative electrode active material is first discharged at a rate of 0.05 C within a voltage range of 0.1-0.005 V, and then discharged at currents of 40 µA and 10 µA is 140-260 mAh/g.

13. The sodium secondary battery according to claim 9, wherein the negative electrode active material comprises hard carbon.

14. The sodium secondary battery according to claim 1, further comprising a positive electrode plate, wherein the positive electrode plate comprises a positive electrode active material.

15. The sodium secondary battery according to claim 14, wherein the positive electrode active material contains a copper element, and based on the total mass of the positive electrode active material, the mass fraction of the copper element is 0.01%-23%.

16. The sodium secondary battery according to claim 15, wherein based on the total mass of the positive electrode active material, the mass fraction of the copper element is 6.5%-18%.

17. The sodium secondary battery according to claim 14, wherein the positive electrode active material comprises a sodium transition metal oxide, the sodium transition metal oxide comprises NaₘCuₙXₒFeₚMn_{q}O₂₋ₛ, in which, X comprises one or more selected from the group consisting of Li, Be, B, Mg, Al, K, Ca, Ti, Co, Ni, Zn, Ga, Sr, Y, Nb, Mo, In, Sn, Fe, and Ba, 0≤m≤0.5, 0≤n≤0.5, 0≤o<0.5, 0≤p≤0.5, 0<q≤0.68, n+o+p+q=1, 0≤s<0.2.

18. The sodium secondary battery according to claim 17, wherein
the sodium transition metal oxide comprises at least one selected from the group consisting of Na[Cu_{1/9}Ni_{2/9}Fe_{1/3}Mn_{1/3}]O₂, Na_{7/9}[Cu_{2/9}Fe_{1/9}Mn_{2/3}]O₂, and Na_{9/10}[Cu_{2/5}Fe_{1/10}Mn_{1/2}]O₂.

19. The sodium secondary battery according to claim 1, wherein
the fluorinated carbonate compound comprises a compound as shown in Formula I, 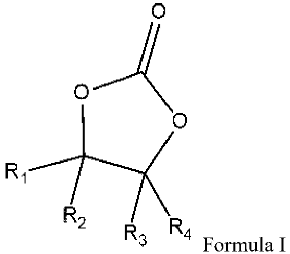 in which, R₁, R₂, R₃, and R₄ each independently include at least one selected from the group consisting of a hydrogen atom, a halogen atom, a C₁₋₆ alkyl group, a C₁₋₃ halogenated alkyl group, a C₁₋₃ alkoxy group, a C₁₋₃ halogenated alkoxy group, an ester group, a cyano group, a sulfonic acid group, or an isocyanate group; and at least one of R₁, R₂, R₃, or R₄ is a fluorine atom.

20. The sodium secondary battery according to claim 1, wherein
the fluorinated carbonate compound comprises at least one of the following compounds,

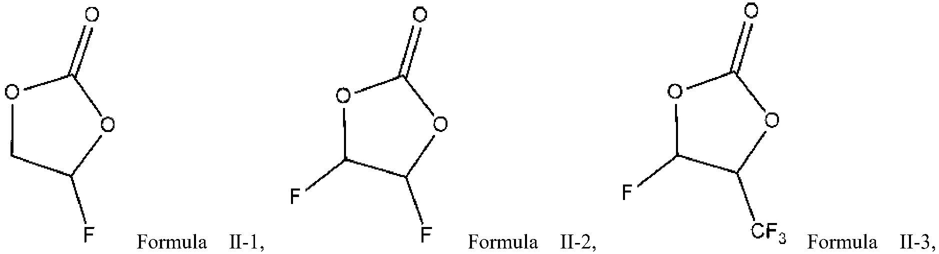

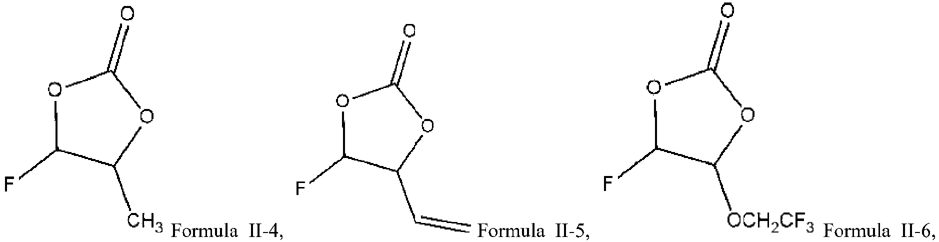

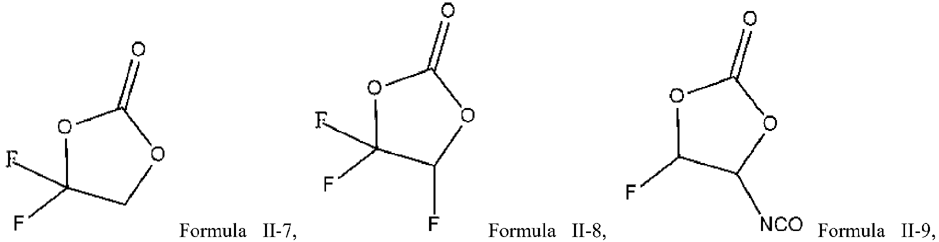

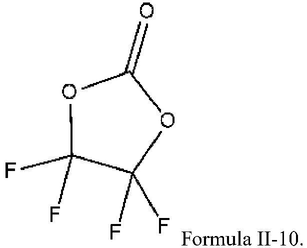

21. The sodium secondary battery according to claim 1, wherein
the electrolyte solution further comprises a second component, the second component is one or more of vinylene carbonate, vinylethylene carbonate, 1,3-propane sultone, 1,3-propene sultone, ethylene sulfate, maleic anhydride, succinic anhydride, triallyl phosphate, sodium bis(oxalato)borate, sodium tetrafluorophosphate, sodium difluoro-bis(oxalato)phosphate, sodium difluorophosphate, and sodium fluorosulfonate.

22. The sodium secondary battery according to claim 21, wherein based on the total mass of the electrolyte solution, the mass fraction of the second component is 0.01%-10%.

23. The sodium secondary battery according to claim 21, wherein based on the total mass of the electrolyte solution, the mass fraction of the second component is 0.1%-5%.

24. An electrical apparatus, comprising the sodium secondary battery according to any one of claims 1 to 23.
